# EUROPEAN PATENT APPLICATION

(11) **EP 1 764 351 A2**
(43) Date of publication of application: **21.03.2007**
(21) Application number: 06253746.9
(22) Date of filing: 18.07.2006
(51) Int. Cl.: C04B 41/87, C04B 41/89, C23C 4/10, F01D 5/28

(54) **Silicon based substrate with hafnium silicate containing barrier layer**

(30) Priority: 19.09.2005 US 230196
(71) Applicant: UNITED TECHNOLOGIES CORPORATION, Hartford, Connecticut 06101 (US)
(72) Inventor: Bhatia, Tania, Middletown Connecticut 06457 (US); Smeggil, John G., Simsbury CT 06070 (US); Tredway, William K., Manchester Connecticut 06040 (US); Schmidt, Wayde R., Pomfret Center Connecticut 06259 (US); Nardone, Vincent C., South Windsor CT 06074 (US)
(74) Representative: Hall, Matthew Benjamin

(57) **Abstract**

An article comprising a substrate containing silicon and a barrier layer which functions as an environmental barrier coating and, more particularly, a barrier layer which comprises hafnium silicate and, optionally, zirconium silicate and a method for forming the hafnium silicate as a barrier coating.

## Description

The present invention relates to an article comprising a substrate containing silicon and a barrier layer which functions as an environmental barrier coating and, more particularly, a barrier layer which comprises hafnium silicate and, optionally, zirconium silicate. The present invention further comprises a method for forming hafnium silicate as a barrier coating.

Ceramic materials containing silicon and metal alloys containing silicon have been proposed for structures used in high temperature applications as, for example, gas turbine engines, heat exchangers, internal combustion engines, and the like. Si-containing ceramics have attractive physical and mechanical properties and are particularly useful in gas turbine engines hot sections which operate at high temperatures, high pressure and high velocity steam rich environments. It has been found that these silicon containing materials are susceptible to attack by steam due to the formation of volatile Si species, particularly Si(OH)ₓ and SiO when exposed to high temperature, aqueous environments as encountered in gas turbine applications. The volatilization of Si-containing species from Si-containing substrates results in recession of the substrate which is clearly undesirable in a long-term application. Environmental barrier coatings (EBCs) have been applied to Si-based ceramics in order to prevent substrate recession and extend the life of gas turbine components.

It is not uncommon for the EBC coating to use one or more layers on a substrate such as barrier layers, bond layers, intermediate layers, and the like. One of the important criteria in the selection of barrier layers/bond layers/intermediate layers is the coefficient of thermal expansion (CTE) of the layer. In order to minimize the build-up of thermal stresses between the various coating layers and the substrate, it is important that the CTE of various constituents of the coating system are close to that of the substrate. A mismatch in the CTE between adjacent coating layers and/or the substrate can result in non-protective coatings due to spallation and/or cracking of the coating during thermal cycles encountered in the operation of a gas turbine engine.

Accordingly, it is a principal object of the present invention to provide an article comprising the silicon containing substrate and at least one barrier layer wherein the barrier layer has a coefficient of thermal expansion which is compatible with the substrate if adjacent to the substrate and compatible with any other adjacent layer(s). The barrier layer of this invention may also be used for the thermal and environmental protection of other ceramic substrates with low thermal expansion coefficients.

The article in accordance with the present invention comprises a substrate and a barrier layer which functions as an environmental barrier coating, wherein the barrier layer comprises hafnium silicate. In accordance with the present invention, hafnium silicate is particularly useful as a component in the barrier layer as hafnium silicate has a high melting point, approximately 1750°C, and is stable in steam. Furthermore, the coefficient of thermal expansion of hafnium silicate is approximately 4.5 to 4.6 ppm/°C from room temperature to 1200°C which makes it compatible with ceramics and composites with CTE in the range 3-7 ppm/°C. These combined properties make a hafnium silicate containing barrier layer particularly useful in environmental barrier coating systems for silicon carbide and silicon nitride containing substrates. The substrates may comprise any suitable material, such as, for example, silicon-containing substrates (i.e., silicon-containing ceramics, silicon-containing metal alloys, etc.) and oxide-oxide substrates. Suitable silicon-containing ceramics include, but are not limited to, silicon nitride, silicon carbide, silicon carbide composites, silicon nitride composites, silicon oxynitrides, silicon aluminum oxynitrides, silicon nitride ceramic matrix composites, etc. Suitable silicon-containing metal alloys include, but are not limited to, molybdenum silicon alloys, niobium silicon alloys, iron silicon alloys, cobalt silicon alloys, nickel silicon alloys, tantalum silicon alloys, refractory metal silicides, etc. Suitable oxide-oxide substrates include, but are not limited to, fiber reinforced oxide matrix composites where the fiber reinforcements include silicon carbide, silicon nitride, alumina, mullite etc and the matrix includes alumina, zirconia and comparable refractory oxides.

In accordance with the present invention, the barrier layer comprises hafnium silicate and, optionally, zirconium silicate. In a preferred embodiment, the barrier layer of the present invention comprises both hafnium silicate and zirconium silicate. In addition to the foregoing, if necessary, the barrier layer can further comprise a coefficient of thermal expansion (CTE) tailoring additive. The barrier layer of the present invention is suitable as a thermal and environmental barrier coating. The barrier layer of the present invention may also be used as an intermediate layer to prevent interaction between adjacent reactive layers in known environmental barrier coating systems (for example a Si/HfO₂ system). The invention further relates to a method for producing the barrier coating on a surface.

In accordance with the present invention, a preferred method comprises preparing a mixture of hafnium oxide and a source of silicon, coating the surface with the mixture, and thereafter exposing the coating to elevated temperature for sufficient time to react the hafnium oxide with the oxidizing silicon to produce a dense hafnium silicate coating.

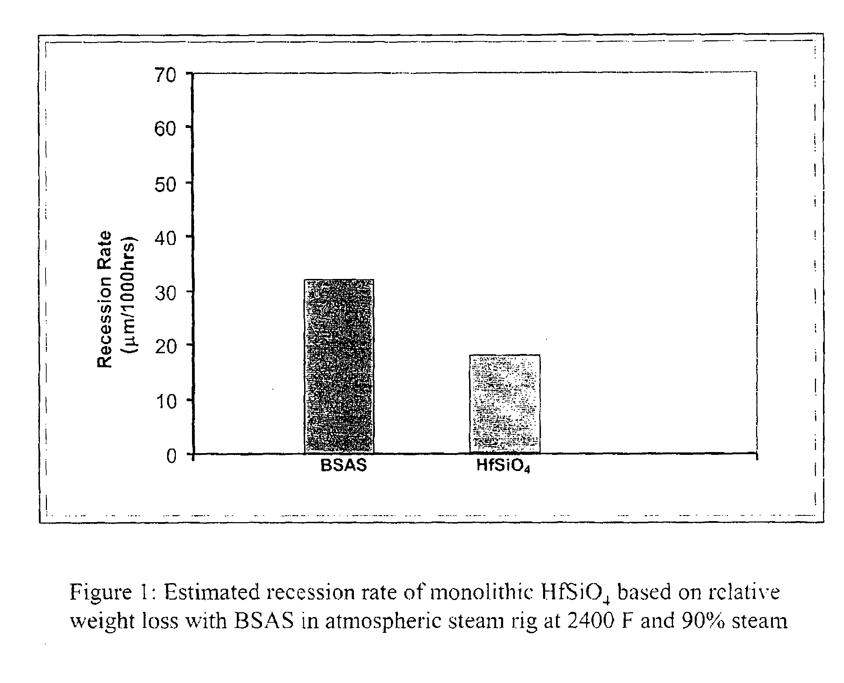

Certain preferred embodiments of the present invention will now be described by way of example only, with reference to the figure which compares the recession rate of a BSAS coating compared to a monolithic hafnium silicate coating as a function of relative weight loss in an environment of 90% steam at a temperature of 1315°C.

The present invention relates to an article comprising a substrate and a barrier layer, wherein the barrier layer inhibits the formation of gaseous species of silicon from the substrate when the article is exposed to high temperature, combustion environments. The invention also relates to a method for producing the aforesaid coated article. In addition, it should be appreciated that while the barrier layer is described as an environmental barrier layer, the barrier layer also functions as a thermal barrier layer and thus the present invention broadly encompasses the use of environmental/thermal barrier layers on silicon containing substrates and on substrates having comparable thermal expansion coefficients.

According to the present invention, the silicon containing substrate may be a silicon containing ceramic substrate or a silicon containing metal alloy. In a preferred embodiment, the silicon containing substrate is a silicon containing ceramic material as, for example, silicon carbide, silicon nitride, silicon carbon nitride, aluminosilicate/mullite, silicon oxynitride, oxide/oxide ceramic matrix composite and silicon aluminum oxynitride and combinations thereof. In accordance with a particular embodiment of the present invention, the silicon containing ceramic substrate comprises a silicon containing matrix with reinforcements such as fibers, particles, and the like and, more particularly, a silicon based matrix which is fiber-reinforced. Particularly suitable ceramic substrates are monolithic silicon nitride, a silicon carbide coated silicon carbide fiber-reinforced silicon carbide particle and silicon matrix, a carbon fiber-reinforced silicon carbide matrix and a silicon carbide fiber-reinforced silicon nitride matrix. Particularly useful silicon-metal alloys for use as substrates for the article of the present invention include molybdenum-silicon alloys, niobium-silicon alloys, and other Si containing alloys having a coefficient of thermal expansion compatible with the barrier layer of the present invention. The barrier layer can also provide environmental and thermal protection to oxide-oxide substrates including, but not limited to, fiber reinforced oxide matrix composites where the fiber reinforcements include silicon carbide, silicon nitride, alumina, mullite etc and the matrix includes alumina, zirconia and comparable refractory oxides.

A particularly useful barrier layer in accordance with the present invention comprises hafnium silicate and, preferably, a combination of hafnium silicate and zirconium silicate. When the barrier layer comprises hafnium silicate without zirconium silicate, the barrier layer should contain at least 50 % hafnium silicate by volume. Preferably, the barrier layer comprises between 50 and 100 % hafnium silicate by volume and, ideally, between 60 and 100 % hafnium silicate. When the barrier layer comprises hafnium silicate in combination with zirconium silicate, the total volume percent of the hafnium silicate and zirconium silicate is between 50 and 100% by volume and preferably between 65 and 100%. In the preferred embodiment, hafnium silicate and zirconium silicate are present in a volume ratio of between 1:49 to 49:1, preferably between 1:19 to 19:1.

In accordance with the preferred embodiment of the present invention, the barrier layer may include a coefficient of the thermal expansion (CTE) tailoring additive in an amount sufficient to maintain compatibility between the barrier layer and any adjacent layer and/or substrate. The CTE tailoring additive is selected from the group consisting of TaOₓ, NbOₓ, MgO, CaO, SrO, BaO, SiO₂, HfO₂, TiO₂, ZrO₂, Al₂O₃, Y₂O₃, La₂O₃, rare earth oxides and mixtures thereof where x = 1 to 3 (for example NbO, NbO₂, Nb₂O₃, Nb₂O₅). In accordance with a preferred embodiment of the present invention, the CTE tailoring additive is added to a layer material for adjusting the CTE of the layer so as to make the layer compatible with the substrate and any other adjacent layers which may be employed.

The CTE tailoring additive should be present in the layer in an amount sufficient to maintain compatibility between itself and adjacent layers and the substrate. When HfO₂ is added, for example to a barrier layer described above, it should be present in an amount of at least 5% by volume, preferably between 10 and 50% by volume, ideally between 10 and 40% by volume.

It is an important feature of the present invention to maintain compatibility between the coefficient of thermal expansion of the silicon containing substrate and the layer and/or adjacent layers. In accordance with the present invention it has been found that the CTE of the layer should be within ±3.0 ppm/°C, preferably ± 2.0 ppm/°C and ideally 1 ppm/°C, of the CTE of the silicon containing substrate and/or adjacent layers.

The barrier layer should be present in the article at a thickness of greater than or equal to about 0.05 mils (0.00005 inch) (1.27 µm), preferably between about 0.1 to about 300 mils (2.54 µm to 7.62 mm) and ideally between about 0.1 to about 10 mils (2.54 to 254 µm). The barrier layer of the present invention may be applied by slurry coating techniques, slurry painting, air plasma spray, air brushing, sol-gel routes, sol-gel, thermal spraying, chemical vapor deposition, physical vapor deposition, electrophoretic deposition, electrostatic deposition, dipping, and sputtering. Application by slurry coating is challenging due to the refractory nature of the hafnium silicate and zirconium silicate and their sluggish sintering rates. If the coatings are applied by slurry coating, additives such as silica, alumina, titania, and oxides of sodium, lithium, calcium, strontium, barium, and magnesium may be used as sintering aides. When dip coating, the starting slurry may be prepared from a combination of HfO₂, ZrO₂ and silicon or silica. Other additives may also be used. The combination of hafnium silicate and zirconium silicate may also be fabricated by a sol-gel method using hafnium/zirconium oxychloride, hydrochloric acids and TEOS in the presence of complexing metal ions or other variations of sol-gel processing known in practice. One of the preferred methods for applying the hafnium silicate coating (and zirconium silicate if desired) is by plasma spraying. In accordance with the present invention, the silicates are applied by mixing an oxide of hafnium (and zirconium if desired) with elemental silicon or silica or other silicon containing source and plasma spraying the mixture on a surface to form a coating. The coating is then heat treated at a temperature of between 980 to 1650°C, preferably 1200 to 1485 °C, for at least 0.5 hours, preferably between 2 to 200 hours, to form a coating comprising hafnium silicate (and zirconium silicate if desired). The barrier layer may also be formed in-situ during operation of the article. When the source of silica is silicon, it is critically important that the heat treatment be carried out in an oxidizing environment.

A further method for applying the coating of the present invention is by chemical vapor deposition of alternating layers of hafnium oxide (and zirconium oxide if desired) with a silicon source (silicon or silica) followed by one or more reacting annealing steps to react the metal oxide with silicon to form the desired silicate or silicate mixture.

A preferred method for producing hafnium silicate coatings in accordance with the present invention is described hereinbelow.

### EXAMPLE

A mixture of HfO₂ and Si powders were plasma sprayed using the parameters listed in Table 1. The coating was subsequently heat treated in air at 1315°C for approximately 100 hours. The resultant coating had all the Si converted into HfSiO₄. Although free HfO₂ remained in the coating, this example shows that HfSiO₄ can be formed by this process by the appropriate choice of HfO₂ and Si amounts. In order for the complete production of HfSiO₄, a 1:1 molar mixture of HfO₂ and Si should be chosen. It should be noted that the substrate temperatures during deposition can be varied from room temperature to 1100°C.

| Powder Composition | HfO₂-20 weight %Si | HfO₂-10 weight %Si |
|---|---|---|
| Gun | Metco 3M (GH Nozzle) | Metco 3M (GH Nozzle) |
| Primary Gas | Ar | Ar |
| Secondary Gas | Hydrogen | Hydrogen |
| Current | 600 mA | 600 mA |
| Voltage | 50V | 50V |
| Carrier Gas | Ar | Ar |
| Stand Off Distance (inches) | 4.75 | 4.75 |
| Spray Temperature (C) | 1093 | 1093 |
| Coating Thickness (microns) | 125 | 125 |
| Gun Speed (inch/sec) | 6 | 6 |

In order to demonstrate the benefits of the barrier layer of the present invention compared to state of the art barium strontium aluminosilicate (BSAS) barrier layers, panels with BSAS and HfSiO₄ compositions were prepared and tested in steam rich environments: Dense panels of BSAS (Ba_{0.75}Sr_{0.25}Al₂Si₂O₈) were processed by hot pressing. Dense panels of Hafnium Silicate were prepared by cold pressing followed by sintering at 1600°C. Coupons of the compositions were subsequently heat treated to 1600°C. The samples were exposed to steam in an atmospheric steam rig with 90% water vapor and 10% oxygen. The steam exposures were carried out at 1315°C for over 500 hours. The recession rate was calculated by measuring the weight loss of the material per unit area exposed.

The Figure shows the comparative results between the recession rates of the monolithic hafnium silicate as prepared above when compared to the barium strontium aluminosilicate. It can be seen from the Figure, the hafnium silicate is at least 1.5 times better in a steam environment when compared to BSAS. This improved steam stability of HfSiO₄ as compared with BSAS implies that coating systems that use HfSiO₄ layers as steam barriers are likely to be more durable than those using BSAS of identical thicknessIt is apparent that there has been provided in accordance with the present invention a silicon based substrate with hafnium silicate containing barrier layer which fully satisfies the objects, means, and advantages set forth hereinbefore. While the present invention has been described in the context of specific embodiments thereof, other alternatives, modifications, and variations will beome apparent to those skilled in the art having read the foregoing description.ccordingly, it is intended to embrace those alternatives, modifications, and variations as fall within the broad scope of the appended claims.

## Claims

1. An article comprising:
a substrate comprising silicon; and
a barrier layer comprising hafnium silicate.

2. An article according to claim 1, wherein the barrier layer comprises at least 50% hafnium silicate by volume.

3. An article according to claim 1 or 2, wherein the barrier layer comprises between 50 and 100% hafnium silicate by volume.

4. An article according to claim 3, wherein the barrier layer comprises between 60 and 100% hafnium silicate by volume.

5. An article according to claim 1, wherein the barrier layer comprises hafnium silicate and zirconium silicate in an amount between 50 and 100% by volume.

6. An article according to claim 5, wherein the barrier layer comprises hafnium silicate and zirconium silicate in an amount between 65 and 100 % by volume.

7. An article according to claim 5 or 6, wherein the barrier layer comprises hafnium silicate and zirconium silicate in a ratio between 1:49 and 49:1 by volume.

8. An article according to claim 7, wherein the barrier layer comprises hafnium silicate and zirconium silicate in ratio between 1:19 to 19:1 by volume.

9. An article according to any preceding claim, wherein the barrier layer further comprises a CTE tailoring additive selected from the group consisting of TaOₓ, NbOₓ, MgO, CaO, SrO, BaO, SiO₂, HfO₂, TiO₂, ZrO₂, Al₂O₃, Y₂O₃, La₂O₃, rare earth oxides and mixtures thereof where x = 1 to 3.

10. An article according to claim 9, wherein the CTE tailoring additive is present in an amount up to 50 % by volume.

11. An article according to claim 10, wherein the CTE tailoring additive is present in an amount of between 10 and 50% by volume.

12. An article according to claim 11, wherein the CTE tailoring additive is present in an amount of between 10 and 40 % by volume.

13. An article according to any preceding claim, further including an intermediate layer between the substrate and the barrier layer.

14. An article according to one of claims 1 to 8, wherein the barrier layer further comprises a CTE tailoring additive wherein the layer has a CTE within ±3.0 ppm/°C of the substrate and/or intermediate layer.

15. An article according to claim 14, wherein the barrier layer has a CTE within ± 2.0 ppm/°C of the substrate and/or intermediate layer.

16. An article according to claim 15, wherein the barrier layer has a CTE within ± 1 ppm/°C, of the CTE of the substrate and/or intermediate layer.

17. An article according to claim 13 to 16, wherein the intermediate layer is selected from the group consisting of barium strontium aluminosilicate, strontium aluminosilicate, yttrium silicate, mullite, silicon metal, silicon oxide and mixtures thereof.

18. An article according to any preceding claim, wherein the barrier layer is an intermediate layer in an environmental barrier coating (EBC) system between two reactive layers of EBC system.

19. An article according to claim 18, where the reactive layers are silicon metal or silicon oxide and hafnium and/or zirconium oxide.

20. An article according to any preceding claim where the substrate has CTE ± 3 ppm/°C of the hafnium silicate containing coating.

21. An article according to claim 20, wherein the substrate comprises a material selected from the group consisting of silicon containing ceramics and metal alloys containing silicon.

22. An article according to claim 20, wherein the substrate comprises silicon carbide, silicon nitride, silicon oxynitride, silicon aluminum oxynitride, mullite, aluminosilicates, alumina and combinations thereof.

23. An article according to claim 20 where the substrate is an oxide/oxide ceramic matrix composite.

24. An article according to any preceding claim, further including a bond layer on the substrate containing silicon.

25. An article according to any preceding claim, wherein the barrier layer has a thickness of between 0.1 and 300 mils (2.54 µm to 7.62 mm).

26. An article according to claim 25, wherein the barrier layer has a thickness of between 0.1 and 10 mils (2.54 to 254 µm).

27. An article according to any preceding claim, wherein the barrier layer coating is produced by a process selected from the group consisting of thermal spraying, chemical vapor deposition, physical vapor deposition, electrophoretic deposition, electrostatic deposition, sol-gel, slurry coating, dipping, air-brushing, sputtering and slurry painting.

28. A method for producing a coating comprising hafnium silicate comprising:
preparing a mixture comprising hafnium oxide and a source of silicon;
plasma spraying the mixture to form a coating; and
heat treating the coating at a temperature of between 980 and 1650°C for at least 0.5 hours to form a coating comprising hafnium silicate.

29. A method according to claim 25, wherein the heat treatment is at a temperature of between 1200 and 1485°C for durations of time between 2 and 200 hours.

30. A method for producing a coating comprising at least one of hafnium silicate and zirconium silicate comprising:
preparing a multilayer coating of at least one of HfO₂ and ZrO₂ and a layer of a silicon source; and
heat treating the multilayer coating at a temperature of between 980 and 1650°C for at least 0.5 hours to form a coating comprising at least one of hafnium silicate and zirconium silicate.
